# EUROPÄISCHE PATENTSCHRIFT

(11) **EP 1 286 134 B1**
(45) Veröffentlichungstag und Bekanntmachung des Hinweises auf die Patenterteilung: **17.05.2006**
(21) Anmeldenummer: 01119998.1
(22) Anmeldetag: 18.08.2001
(51) Int. Cl.: G01B 11/00, G01B 11/02

(54) **Vorrichtung und Verfahren zur Erfassung der Geometrie von Werkstücken**
Apparatus and method for measuring the geometry of workpieces
Dispositif et procédé pour mesurer la géométrie de pièces

(43) Veröffentlichungstag der Anmeldung: 26.02.2003
(73) Patentinhaber: TRUMPF Werkzeugmaschinen GmbH + Co. KG, 71254 Ditzingen (DE)
(72) Erfinder: Horn, Armin, Dr., 71272 Renningen (DE)
(74) Vertreter: Stoffregen, Hans-Herbert

(56) Entgegenhaltungen:
- EP-A- 0 462 289
- DE-A- 4 434 233
- US-A- 4 838 696
- US-A- 5 319 445

## Beschreibung

Die Erfindung betrifft eine Vorrichtung zur Erfassung der Geometrie von Werkstücken, mit einer Aufnahmeeinheit sowie mit einer Positionserfassungseinrichtung, wobei die Aufnahmeeinheit ein Objekterfassungsmittel sowie eine Lichtquelle umfasst, das Objekterfassungsmittel und das zu erfassende Werkstück relativ zueinander bewegbar sind und das Werkstück dabei mittels der Lichtquelle ausschnittweise beleuchtbar und in beleuchtetem Zustand von dem mittels der Lichtquelle belichteten Objekterfassungsmittel ausschnittweise erfassbar ist und wobei mittels der Positionserfassungseinrichtung die Positionen erfassbar sind, welche das Objekterfassungsmittel bei der Erfassung der Ausschnitte des Werkstücks relativ zu dem Werkstück einnimmt. Die Erfindung betrifft des Weiteren ein entsprechendes Verfahren zur Erfassung der Geometrie von Werkstücken.

Derartige Vorrichtungen und derartige Verfahren dienen dazu, Werkstücke oder Werkstückteile, die beispielsweise aufgrund ihrer Größe nicht durch eine einzelne Aufnahme erfasst werden können, umfassend abzubilden. Aus Einzelaufnahmen, die jeweils einen Ausschnitt des abzubildenden Objekts bzw. des abzubildenden Objekt-Teilbereichs erfassen, wird dabei die gewünschte Gesamtabbildung zusammengesetzt. Zu diesem Zweck muss die Lage der einzeln aufgenommenen Objektausschnitte zueinander definiert sein. Eine derartige Lagebestimmung der Objektausschnitte erfolgt auf dem Umweg über die Erfassung derjenigen Positionen, welche das Objekterfassungsmittel bei der Aufnahme der Objektausschnitte einnimmt. Jedem Objektausschnitt ist eine ganz bestimmte Position des Objekterfassungsmittels zugeordnet.

Ein Verfahren und eine Vorrichtung der eingangs genannten Art sind bekannt aus US-A-5,184,217. Dabei wird eine Aufnahmeeinheit mit einer CCD-Anordnung als Objekterfassungsmittel sowie einer Leuchtstofflampe als Lichtquelle verwendet. Das abzubildende Objekt wird bei Dauerbeleuchtung durch die Leuchtstofflampe mit der CCD-Anordnung streifenweise überfahren. Aus den dabei aufgenommenen Objektausschnitten wird mittels eines Auswerterechners die gewünschte Gesamtabbildung zusammengesetzt. Außerdem ist aus DE 44 34 233 bekannt, das Objekt mit linienförmigen, gepulstem Laserlicht zu beleuchten. Ein Fisch mit integriertem Encoder versehiebt dabei das Objekt und ein Fahtgeben in der Kamera triggert den Laser und die Erzeugung des Positionswerts in Encoder.

Eine Vorrichtung sowie ein Verfahren bereitzustellen, mittels derer sich die Geometrie von Werkstücken ausgehend von aufgenommenen Werkstückausschnitten mit großer Genauigkeit erfassen lässt, ist Aufgabe der vorliegenden Erfindung.

Erfindungsgemäß gelöst wird diese Aufgabe vorrichtungsbezogen durch die Merkmalskombination von Patentanspruch 1, verfahrensgezogen durch die Merkmalskombination von Patentanspruch 7. Entsprechend den Anspruchsmerkmalen erfasst das genannte Objekterfassungsmittel die ihm zugeordneten Ausschnitte des Werkstücks, wenn es blitzartig belichtet wird. Der Zeitpunkt der Ausschnitterfassung durch das Objekterfassungsmittel steht somit im Zusammenhang mit dessen Belichtungszustand. Gleichzeitig ist mit dem Belichtungszustand des Objekterfassungsmittels anspruchsgemäß der Betriebszustand der Positionserfassungseinrichtung gekoppelt. So nimmt die Positionserfassungseinrichtung diejenigen Positionen des Objekterfassungsmittels auf, welche dieses bei blitzartiger Belichtung einnimmt. Alles in allem bewirken die erfindungsgemäßen Merkmale, dass jede Positionserfassung durch die Positionserfassungseinrichtung exakt zu demjenigen Zeitpunkt erfolgt, zu dem mit dem Objekterfassungsmittel ein Ausschnitt des Werkstücks aufgenommen wird. Bei den mittels der Positionserfassungseinrichtung erfassten Positionen handelt es sich folglich um diejenigen Positionen, welche das Objekterfassungsmittel bei der Aufnahme der Werkstückausschnitte tatsächlich eingenommen hat. Mit den Positionen des Objekterfassungsmittels aber sind auch die diesen entsprechenden Positionen der betreffenden Werkstückausschnitte exakt erfasst. Dies wiederum schafft die Voraussetzung dafür, dass die Werkstückausschnitte zu einer Gesamtabbildung des Werkstücks bzw. von Werkstückbereichen zusammengesetzt werden können, welche die tatsächlichen Verhältnisse mit größer Genauigkeit wiedergibt.

Besondere Ausführungsarten der erfindungsgemäßen Vorrichtung nach Patentanspruch 1 ergeben sich aus den abhängigen Patentansprüchen 2 bis 6.

Im Falle der Erfindungsbauart nach Patentanspruch 2 ist eine Korrektureinrichtung für die Positionserfassung vorgesehen, mittels derer Störeinflüsse bei der Erfassung der Positionen des Objekterfassungsmittels berücksichtigt werden können. Bei derartigen Störeinflüssen handelt es sich beispielsweise um Schwingungen der das Objekterfassungsmittel tragenden Vorrichtungsteile bei der Erfassung der Ausschnitte des Werkstücks. Gleichfalls denkbar sind konstruktive Toleranzen an Vorrichtungsteilen, welche die Genauigkeit der durchgeführten Positionserfassungen beeinträchtigen. Wird nun - wie ausweislich Patentanspruch 2 vorgesehen - die Korrektureinrichtung für die Positionserfassung zu demjenigen Zeitpunkt aktiviert, zu welchem das Objekterfassungsmittel blitzartig belichtet und folglich die Positionserfassungseinrichtung aktiviert ist, so ist gewährleistet, dass die Korrektureinrichtung genau dann verfügbar ist und ihrer Funktion entsprechend arbeitet, wenn sie tatsächlich benötigt wird.

Im Sinne der Erfindung bestehen mehrere Möglichkeiten zur blitzartigen Belichtung des Objekterfassungsmittels. So kann etwa zwischen dem Objekterfassungsmittel und einer permanent eingeschalteten Lichtquelle eine steuerbare Lichtsperre vorgesehen sein, die sich intermittierend öffnen und schließen lässt und dadurch für eine blitzartige Belichtung des Objekterfassungsmittels sorgt. Erfindungsgemäß bevorzugt wird aber die in Patentanspruch 3 beschriebene Alternative, wonach die Lichtquelle bezüglich ihres Betriebszustandes in einem blitzartiges Licht aussendenden Sinne steuerbar ist. In diesem Fall erfolgt die Steuerung der Positionserfassungseinrichtung und gegebenenfalls die Steuerung der Korrektureinrichtung für die Positionserfassung zweckmäßigerweise gekoppelt mit dem eindeutig definierten Betriebszustand der Lichtquelle.

Gemäß Patentanspruch 4 wird der Zusammenhang zwischen dem Belichtungszustand des Objekterfassungsmittels und dem Betriebszustand der Positionserfassungseinrichtung und gegebenenfalls der Korrektureinrichtung für die Positionserfassung über den steuerungstechnisch einfach handhabbaren Parameter "Zeit" hergestellt. Insofern besteht in diesem Fall eine mittelbare Abhängigkeit der Steuerung der Positionserfassungseinrichtung und gegebenenfalls der Korrektureinrichtung für die Positionserfassung von dem Belichtungszustand des Objekterfassungsmittels bzw. von dem Betriebszustand der Lichtquelle.

Die in Patentanspruch 5 beschriebene Ausführungsform der erfindungsgemäßen Vorrichtung zeichnet sich dadurch aus, dass die Steuerung des Belichtungszustandes des Objekterfassungsmittels, gegebenenfalls die Steuerung des Betriebszustandes der Lichtquelle einerseits sowie die Steuerung der Positionserfassungseinrichtung und gegebenenfalls die Steuerung der Korrektureinrichtung für die Positionserfassung andererseits einen gemeinsamen zeitlichen Bezugspunkt besitzen.

In bevorzugter Ausgestaltung der Erfindung wird gemäß Patentanspruch 6 eine Aufnahmeeinheit verwendet, die eine herkömmliche CCD-Kamera umfasst. Das von deren Kamerasteuerung in üblicher Weise erzeugte Startsignal, von dem ausgehend der Zeitpunkt der Erzeugung eines Lichtblitzes durch das Blitzgerät eindeutig definiert ist, dient erfindungsgemäß auch als zeitlicher Bezugspunkt für die Steuerung der Positionserfassungseinrichtung und gegebenenfalls für die Steuerung der Korrektureinrichtung für die Positionserfassung.

Besondere Ausführungsarten des erfindungsgemäßen Verfahrens nach Patentanspruch 7 ergeben sich dadurch, dass ausgehend von diesem-Verfahrens-Grundkonzept die in den abhängigen Vorrichtungsansprüchen angegebenen Merkmale in entsprechende, einzeln oder in Kombination miteinander vorzusehende Verfahrensschritte umgesetzt werden.

Nachstehend wird die Erfindung anhand beispielhafter schematischer Darstellungen näher erläutert. Es zeigen:
- Fig. 1: eine Vorrichtung zur Erfassung der Geometrie von Werkstücken in der schematisierten Seitenansicht,
- Fig. 2: die Vorrichtung nach Fig. 1 in der schematisierten Draufsicht,
- Fig. 3: den Steuerungsaufbau der Vorrichtung nach den Fign. 1 und 2 und
- Fig. 4: zeitabhängige Steuerungssignale an der Vorrichtung nach den Fign. 1 bis 3.

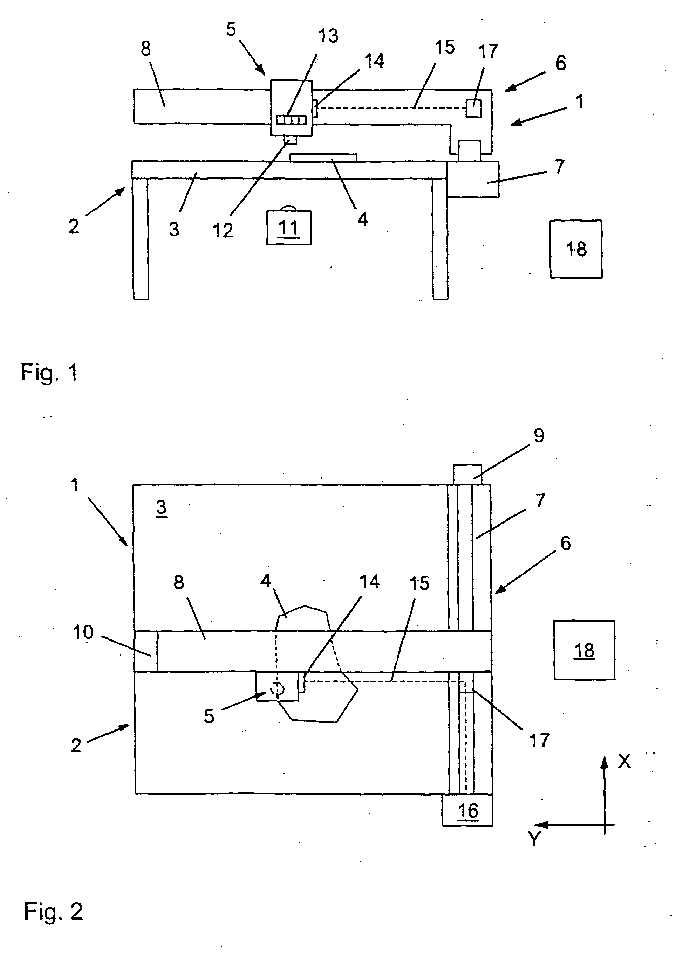

Ausweislich der Fign. 1 und 2 umfasst eine Vorrichtung 1 zur Erfassung der Geometrie von Werkstücken einen Koordinatentisch 2 mit einer transparenten Auflage 3, auf welcher ein Werkstück 4 abgelegt ist. Weiterhin vorgesehen ist eine CCD-Kamera 5, die mittels einer Koordinatenführung 6 angetrieben über die Auflage 3 des Koordinatentischs 2 verfahrbar ist und sich dabei in einer durch eine x-Achse sowie eine y-Achse aufgespannten Horizontalebene bewegt.

Die Koordinatenführung 6 der CCD-Kamera 5 wird gebildet von einer an dem Koordinatentisch 2 in Richtung der x-Achse verlaufenden x-Schiene 7 sowie von einem an der x-Schiene 7 in Richtung der y-Achse vorkragenden Ausleger 8. Zum Antrieb des Auslegers 8 an der x-Schiene 7 dient ein x-Motor 9. Entsprechend ist ein y-Motor 10 zum Verfahren der CCD-Kamera 5 entlang dem Ausleger 8 vorgesehen.

Synchron mit der CCD-Kamera 5 bewegt wird eine Lichtquelle-in Form eines Blitzgerätes 11, das an der von der CCD-Kamera 5 abliegenden Seite der Auflage 3 vorgesehen ist. Dabei liegt das Blitzgerät 11 einem Objektiv 12 der CCD-Kamera 5 gegenüber. Hinter dem Objektiv 12 ist im Innern der CCD-Kamera 5 als Objekterfassungsmittel eine Anordnung 13 von CCD-Elementen untergebracht.

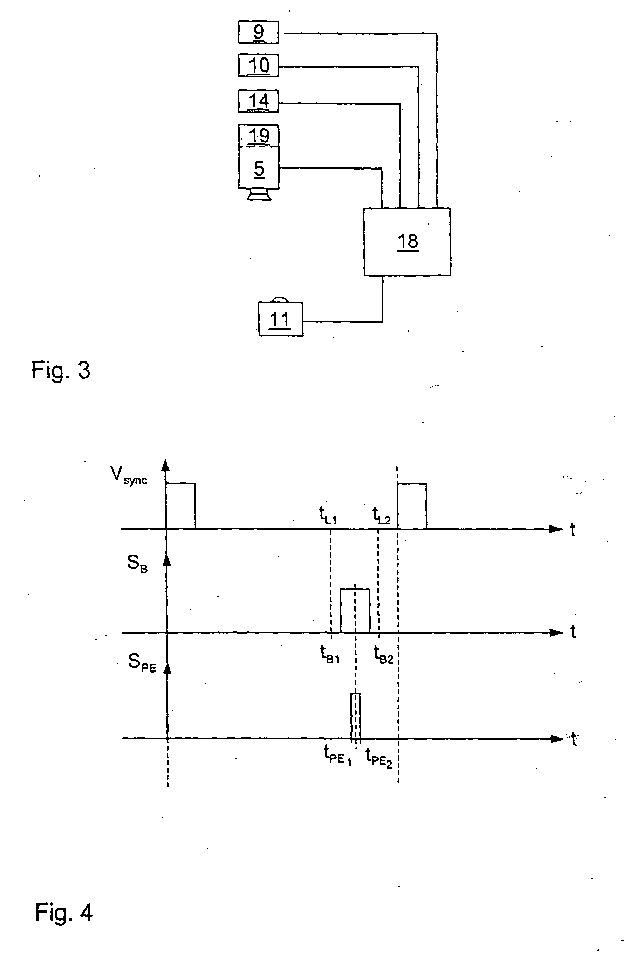

Die CCD-Kamera 5 ist ebenso wie das Blitzgerät 11 herkömmlicher Bauart. An der Außenseite des Kameragehäuses ist ein PSD (Position Sensitive Device) 14 angebracht, auf den bei Betrieb der Vorrichtung 1 ein Laserstrahl 15 trifft. Dieser wird mittels einer an dem Koordinatentisch 2 angebrachten Laserdiode 16 erzeugt, von der ausgehend er zunächst in Richtung der x-Achse verläuft, ehe er mittels eines Pentaprismas 17 an dem Ausleger 8 unter einem Winkel von 90° in Richtung der y-Achse umgelenkt wird. Sämtliche Funktionen der Vorrichtung 1 werden von einer Vorrichtungssteuerung gesteuert, die neben einem Zentralrechner 18 eine Kamerasteuerung 19 der CCD-Kamera 5 umfasst (Figur 3).

Soll nun mittels der Vorrichtung 1 die unregelmäßige Außenkontur des Werkstückes 4 erfasst werden, so fährt die CCD-Kamera 5 von der Vorrichtungssteuerung 18, 19 gesteuert das ruhende Werkstück 4 ab und macht dabei eine Folge von jeweils einen Ausschnitt des Werkstücks 4 bzw. der Werkstückkontur erfassenden Einzelaufnahmen.

Zu diesem Zweck erzeugt die in die CCD-Kamera 5 integrierte Kämerasteuerung 19 Startsignale V_{sync}, von denen jedes den Beginn eines Einzelbildaufnahmeablaufs markiert (oberer Signalverlauf in Figur 4). In zeitlicher Abhängigkeit von dem Startsignal V_{sync} versetzt die Kamerasteuerung 19 bzw. der Zentralrechner 18 dann die Anordnung 13 in einem Zeitraum t_{L1} bis t_{L2} in einen aufnahmefähigen Zustand, bewirkt also das Öffnen einer "elektronischen Blende". Abweichend von den gezeigten Verhältnissen kann die Kamerasteuerung 19 auch in den Zentralrechner 18 integriert sein.

Ebenfalls in Abhängigkeit von dem Startsignal V_{sync} generiert die Vorrichtungssteuerung 18, 19 ein Steuersignal S_{B} für das Blitzgerät 11. Die zeitliche Abhängigkeit des Steuersignals S_{B} von dem Startsignal V_{sync} ist dabei derart gewählt, dass das Steuersignal S_{B} während desjenigen Zeitraums wirksam ist, in welchem die "elektronische Blende" an der CCD-Kamera 5 geöffnet ist. Das Zeitintervall des Steuersignals S_{B} wird durch die Zeitpunkte t_{B1} und t_{B2} begrenzt (mittlerer Signalverlauf in Fig. 4). Während das Blitzgerät 11 aktiviert ist, also blitzartiges Licht aussendet, werden mittels der CCD-Kamera 5 die Einzelbildaufnahmen getätigt. Von den CCD-Elementen der Anordnung 13 dabei erzeugte Bildsignale werden in der Vorrichtungssteuerung 18, 19 verarbeitet.

Außerdem wird von der Vorrichtungssteuerung 18, 19 in zeitlicher Abhängigkeit von dem Startsignal V_{sync} ein Steuersignal S_{PE} für eine Positionserfassungseinrichtung erzeugt. Das Steuersignal S_{PE} setzt im gezeigten Beispielsfall nahe der Mitte des Zeitintervalls t_{B1}, t_{B2} des Steuersignals S_{B} ein und endet vor dem Zeitpunkt t_{B2} und somit auch vor dem Zeitpunkt der Erzeugung des nächsten Startsignals V_{sync} (unterer Signalverlauf in Fig. 4). Die Positionserfassungseinrichtung ist flankengetriggert mit der positiven Flanke des Steuersignals S_{PE}. Sie ist demnach aktiviert, wenn das Blitzgerät 11 blitzartiges Licht aussendet.

Die Positionserfassungseinrichtung dient zur Erfassung derjenigen Positionen, welche die Anordnung 13 von CCD-Elementen bei den Einzelbildaufnahmen einnimmt. Sie umfasst neben dem Zentralrechner 18 den x-Motor 9, den y-Motor 10 sowie den PSD 14. Aufgrund ihrer gemäß Fig. 3 bestehenden Kopplung mit dem Zentralrechner 18 liefern der x-Motor 9 und der y-Motor 10 an den Zentralrechner 18 fortlaufend Informationen, anhand derer sich die Position der CCD-Kamera 5 bzw. der Anordnung 13 von CCD-Elementen so ermitteln lässt, wie sie sich infolge des Betriebs der genannten Motoren darstellt. Diese motorbezogene Position der Anordnung 13 stimmt jedoch nicht immer mit der tatsächlichen Position der Anordnung 13 bei der Einzelbildaufnahme überein. Über den x-Motor 9 erfasst wird die Position, welche der Ansatz des Auslegers 8 an der x-Schiene 7 in Richtung der x-Achse einnimmt. Mittels des y-Motors 10 wird die Position der CCD-Kamera 5 bzw. der Anordnung 13 an dem Ausleger 8 in Richtung der y-Achse bestimmt. Bei der Bewegung der CCD-Kamera 5 können nun aber massebedingt Schwingungen auftreten, infolge derer die tatsächliche. Kameraposition und somit die tatsächliche Position der Anordnung 13 von der motorbezogenen Position abweicht. Eine derartige Abweichung wird erfasst mittels des PSD 14, der gemeinsam mit dem Zentralrechner 18 eine Korrektureinrichtung bildet.

Ist die CCD-Kamera 5 frei von Schwingungen in der von der x-Achse sowie der y-Achse aufgespannten Horizontalebene, so trifft der von der Laserdiode 16 erzeugte und an dem Pentaprisma 17 abgelenkte Laserstrahl 15 an einer definierten Stelle auf den PSD 14 auf. Schwingungen der CCD-Kamera 5 in der genannten Horizontalebene bewirken eine Verlagerung des Auftreffpunktes des Laserstrahls 15 an dem PSD 14. Aus dieser Verlagerung des Auftreffpunktes des Laserstrahls 15 an dem PSD 14 wird von dem Zentralrechner 18 ein Korrekturwert bestimmt, mittels dessen die erfasste motorbezogene Position der CCD-Kamera 5 bzw. der Anordnung 13 von CCD-Elementen von den Störeinflüssen durch die Kameraschwingungen bereinigt wird. Als Ergebnis ermittelt der Zentralrechner 18 somit die tatsächlichen Positionen der Anordnung 13 zum Zeitpunkt der Einzelbildaufnahmen. Auch die beschriebene Korrektureinrichtung ist als Teil der Positionserfassungseinrichtung in einen aktiven Zustand gesteuert, wenn das Blitzgerät 11 blitzartiges Licht aussendet und dabei von der Anordnung 13 Einzelaufnahmen von Ausschnitten des Werkstücks 4 gemacht werden.

Jedem aufgenommenen Einzelbild kann somit von dem Zentralrechner 18 exakt seine Position zugeordnet werden. Infolgedessen lassen sich die Einzelbilder mittels des Zentralrechners 18 zu einer Gesamtabbildung der Kontur des Werkstückes 4 zusammensetzen; welche mit großer Genauigkeit den tatsächlichen Verhältnissen entspricht.

Die Signalverläufe gemäß Fig. 4 sind in großem Umfang bedingt durch die Bauart der in dem dargestellten Beispielsfall eingesetzten CCD-Kamera 5. So beträgt die Frequenz der Einzelbildaufnahme an der CCD-Kamera 5 50 Hz, die Öffnungsdauer der "elektronischen Blende" (Intervall t_{L1}, t_{L2}) 100 Mikrosekunden und die Blitzdauer (Intervall t_{B1}, t_{B2}) 10 Mikrosekunden. Eine äußerst kurze Blitzdauer empfiehlt sich insbesondere aufgrund des Umstandes, dass die CCD-Kamera 5 während der Einzelbildaufnahmen relativ zu dem Werkstück 4 bewegt wird, dessen ungeachtet aber eine hinreichende Bildschärfe erzielt werden muss. Die Intensität des Blitzlichtes muss ebenfalls im Interesse einer möglichst großen Bildschärfe die Intensität des Umgebungslichtes deutlich übersteigen, welches während des Zeitintervalls t_{L1}, t_{L2} ebenfalls auf die CCD-Elemente der Anordnung 13 auftrifft. Zur Minimierung des Umgebungslichteinflusses ist die Öffnungsdauer t_{L1}, t_{L2} der "elektronischen Blende" nur geringfügig größer als die Blitzdauer t_{B1}, t_{B2}.

Die mittels der Vorrichtung 1 gewonnene Gesamtabbildung des Werkstücks 4 wird in gewohnter Weise bei der Qualitätskontrolle zum Vergleich mit Fertigungsteilen oder bei der Programmierung CNC-gesteuerter Fertigungsmaschinen als Vorlage für zu fertigende Teile verwendet.

## Patentansprüche

1. Vorrichtung zur Erfassung der Geometrie von Werkstücken, mit einer Aufnahmeeinheit sowie mit einer Positionserfassungseinrichtung (9, 10, 14, 18), wobei die Aufnahmeeinheit ein Objekterfassungsmittel (13) sowie eine Lichtquelle (11) umfasst, mittels derer das Objekterfassungsmittel (13) blitzartig belichtbar ist, wobei das Objekterfassungsmittel (13) und das zu erfassende Werkstück (4) relativ zueinander bewegbar sind und das Werkstück (4) dabei mittels der Lichtquelle (11) ausschnittweise beleuchtbar und die beleuchteten Ausschnitte des Werkstücks (4) bei blitzartiger Belichtung des Objekterfassungsmittels (13) von diesem erfassbar sind, wobei mittels der Positionserfassungseinrichtung (9, 10, 14, 18) die Positionen erfassbar sind, welche das Objekterfassungsmittel (13) bei der Erfassung der Ausschnitte des Werkstücks (4) relativ zu dem Werkstück (4) einnimmt und die Positionserfassungseinrichtung (9, 10, 14, 18) gekoppelt mit dem Belichtungszustand des Objekterfassungsmittels (13) steuerbar ist, wobei eine Vorrichtungssteuerung (18, 19) vorgesehen ist, mittels derer der Belichtungszustand des Objekterfassungsmittels (13) sowie die Positionserfassungseinrichtung (9, 10, 14, 18) zeitabhängig steuerbar sind und welche Basissignale (V_{sync}) erzeugt, welche jeweils den Beginn eines Einzelbildaufnahmeablaufs markieren, **dadurch gekennzeichnet, dass** die Vorrichtungssteuerung (18, 19) jeweils zeitlich nach der Erzeugung eines Basissignals (V_{sync}) und vor der Erzeugung eines darauffolgenden Basissignals (V_{sync}) das Objekterfassungsmittel (13) für die Dauer eines Zeitintervalls (t_{L1}, t_{L2}) in einen aufnahmefähigen Zustand versetzt und ein Steuersignal (S_{B}) zur blitzartigen Belichtung des Objekterfassungsmittels (13) sowie ein Steuersignal (S_{PE}) für die Positionserfassungseinrichtung (9, 10, 14, 18) erzeugt, wobei das Steuersignal (S_{B}) zur blitzartigen Belichtung des Objekterfassungsmittels (13) während eines Zeitintervalls (t_{B1}, t_{B2}) wirksam ist, das nach dem Anfangszeitpunkt (t_{L1}) des Zeitintervalls (t_{L1}, t_{L2}) beginnt, während dessen das Objekterfassungsmittel (13) in einen aufnahmefähigen Zustand versetzt ist und das vor dem Endzeitpunkt (t_{L2}) dieses Zeitintervalls endet und wobei das Steuersignal (S_{PE}) für die Positionserfassungseinrichtung (9, 10, 14, 18) nahe der Mitte des Zeitintervalls (t_{B1}, t_{B2}) des Steuersignals (S_{B}) zur blitzartigen Belichtung des Objekterfassungsmittels (13) einsetzt und vor dem Endzeitpunkt (t_{B2}) dieses Zeitintervalls endet und dadurch die Positionserfassungseinrichtung (9, 10, 14, 18) aktiviert ist und die Position des Objekterfassungsmittels (13) erfasst, wenn dieses blitzartig belichtet ist.

2. Vorrichtung nach Anspruch 1, **dadurch gekennzeichnet, dass** die Positionserfassungseinrichtung (9, 10, 14, 18) eine Korrektureinrichtung (14, 18) für die Positionserfassung umfasst, mittels derer Störeinflüsse bei der Erfassung der Positionen des Objekterfassungsmittels (13) berücksichtigbar sind und dass die Korrektureinrichtung (14, 18) gekoppelt mit dem Belichtungszustand des Objekterfassungsmittels (13) steuerbar ist, wobei die Korrektureinrichtung (14, 18)aktiviert ist, wenn das Objekterfassungsmittel (13) blitzartig belichtet ist.

3. Vorrichtung nach einem der vorhergehenden Ansprüche, **dadurch gekennzeichnet, dass** das Objekterfassungsmittel (13) gesteuert blitzartig belichtbar ist, indem die Lichtquelle (11) mittels der Vorrichtungssteuerung (18,19) zeitabhängig bezüglich ihres Betriebszustandes in einem blitzartiges Licht aussendenden Sinne steuerbar ist und dass die Positionserfassungseinrichtung (9, 10, 14, 18) und gegebenenfalls die Korrektureinrichtung (14, 18) für die Positionserfassung gekoppelt mit dem Betriebszustand der Lichtquelle (11) steuerbar ist, wobei die Positionserfassungseinrichtung (9, 10, 14, 18) und gegebenenfalls die Korrektureinrichtung (14, 18) aktiviert ist, wenn die Lichtquelle (11) blitzartiges Licht aussendet.

4. Vorrichtung nach einem der vorhergehenden Ansprüche, **dadurch gekennzeichnet, dass** mittels der Vorrichtungssteuerung (18, 19) die Korrektureinrichtung (14, 18) für die Positionserfassung zeitabhängig steuerbar ist.

5. Vorrichtung nach einem der vorhergehenden Ansprüche, **dadurch gekennzeichnet, dass** die Steuerung der Korrektureinrichtung (14, 18) für die Positionserfassung zeitlich gekoppelt mit dem Basissignal erfolgt.

6. Vorrichtung nach einem der vorhergehenden Ansprüche, **dadurch gekennzeichnet, dass** die Aufnahmeeinheit eine CCD-Kamera (5) umfasst, mittels derer eine Folge von jeweils einen Ausschnitt des Werkstücks (4) erfassenden Einzelbildern aufnehmbar ist und die wenigstens ein CCD-Element als Objekterfassungsmittel (13) sowie eine Kamerasteuerung (19) aufweist, welche ein den Beginn eines Einzelbildaufnahmeablaufs markierendes Startsignal (V_{sync}) als Basissignal erzeugt und zeitlich gekoppelt mit diesem Startsignal (V_{sync}) eine Lichtquelle (11) in Form eines Blitzgerätes in einem blitzartiges Licht aussendenden Sinne steuert und dass die Positionserfassungseinrichtung (9, 10, 14, 18) und gegebenenfalls die Korrektureinrichtung (14, 18) für die Positionserfassung gleichfalls zeitlich gekoppelt mit dem durch die Kamerasteuerung (19) erzeugten Startsignal (V_{sync}) steuerbar ist, wobei die Positionserfassungseinrichtung (9, 10, 14, 18) und gegebenenfalls die Korrektureinrichtung (14, 18) aktiviert ist, wenn das Blitzgerät blitzartiges Licht aussendet.

7. Verfahren zur Erfassung der Geometrie von Werkstücken, wobei das zu erfassende Werkstück (4) und ein Objekterfassungsmittel (13) einer Aufnahmeeinheit relativ zueinander bewegt werden und dabei das Werkstück (4) mittels einer Lichtquelle (11) der Aufnahmeeinheit ausschnittweise beleuchtet und die beleuchteten Ausschnitte des Werkstücks (4) bei mittels der Lichtquelle (11) bewirkter blitzartiger Belichtung des Objekterfassungsmittels (13) von diesem erfasst werden, wobei mittels einer Positionserfassungseinrichtung (9, 10, 14, 18) die Positionen des Objekterfassungsmittels (13) erfasst werden, welche dieses bei der Erfassung der Ausschnitte des Werkstücks (4) relativ zu dem Werkstück (4) einnimmt und die Positionserfassungseinrichtung (9, 10, 14, 18) gekoppelt mit dem Belichtungszustand des Objekterfassungsmittels (13) gesteuert wird, wobei der Belichtungszustand des Objekterfassungsmittels (13) und die Positionserfassungseinrichtung (9, 10, 14, 18) durch eine Vorrichtungssteuerung (18, 19) zeitabhängig gesteuert werden, welche Basissignale (V_{sync}) erzeugt, die jeweils den Beginn eines Einzelbildaufnahmeablaufs markieren, **dadurch gekennzeichnet, dass** von der Vorrichtungssteuerung (18, 19) jeweils zeitlich nach der Erzeugung eines Basissignals (V_{sync}) und vor der Erzeugung eines darauffolgenden Basissignals (V_{sync}) das Objekterfassungsmittel (13) für die Dauer eines Zeitintervalls (t_{L1}, t_{L2}) in einen aufnahmefähigen Zustand versetzt und ein Steuersignal (S_{B}) zur blitzartigen Belichtung des Objekterfassungsmittels (13) sowie ein Steuersignal (S_{PE}) für die Positionserfassungseinrichtung (9, 10, 14, 18) erzeugt werden, wobei das Steuersignal (S_{B}) zur blitzartigen Belichtung des Objekterfassungsmittels (13) während eines Zeitintervalls (t_{B1}, t_{B2}) wirksam ist, das nach dem Anfangszeitpunkt (t_{L1}) des Zeitintervalls (t_{L1}, t_{L2}) beginnt, während dessen das Objekterfassungsmittel (13) in einen aufnahmefähigen Zustand versetzt ist und das vor dem Endzeitpunkt (t_{L2}) dieses Zeitintervalls endet und wobei das Steuersignal (S_{PE}) für die Positionserfassungseinrichtung (9, 10, 14, 18) nahe der Mitte des Zeitintervalls (t_{B1}, t_{B2}) des Steuersignals (S_{B}) zur blitzartigen Belichtung des Objekterfassungsmittels (13) einsetzt und vor dem Endzeitpunkt (t_{B2}) dieses Zeitintervalls endet und dadurch die Positionserfassungseinrichtung (9, 10, 14, 18) aktiviert wird und die Position des Objekterfassungsmittels (13) erfasst, wenn dieses blitzartig belichtet ist.

## Claims

1. Device for acquisition of the geometry of workpieces, with a recording unit and with a position acquisition unit (9, 10, 14, 18), where the recording unit comprises an object acquisition means (13) and a light source (11) using which the object acquisition means (13) is exposable by flash, where the object acquisition means (13) and the workpiece (4) to be acquired are movable relative to one another and the workpiece (4) can be illuminated section for section by the light source (11) and the illuminated sections of the workpiece (4) can be acquired by the object acquisition means (13) when the latter is exposed by flash, where the positions which the object acquisition means (13) assumes up during acquisition of the sections of the workpiece (4) relative to the workpiece are acquirable by the position acquisition unit (9, 10, 14, 18), and the position acquisition unit (9, 10, 14, 18) is controllable coupled with the exposure state of the object acquisition means (13), where a device control unit (18, 19) is provided by which the exposure state of the object acquisition means (13) and the position acquisition unit (9, 10, 14, 18) are controllable depending on the time and which generates base signals (V_{sync}) which each mark the start of an single image recording sequence, wherein the device control unit (18, 19) after the generation of a base signal (V_{sync}) and before the generation of a subsequent base signal (V_{sync}) puts the object acquisition means into a recording-capable state for the duration of a time interval (t_{L1}, t_{L2}) and generates a control signal (S_{B}) for exposure by flash of the object acquisition means (13) and a control signal (S_{PE}) for the position acquisition unit (9, 10, 14, 18), where the control signal (S_{B}) for exposure by flash of the object acquisition means (13) is effective during a time interval (t_{B1}, t_{B2}) that starts after the start time (t_{L1}) of the time interval (t_{L1}, t_{L2}) while the object acquisition means (13) is put into a recording-capable state and that ends before the end time (t_{L2}) of this time interval and where the control signal (S_{PE}) for the position acquisition unit (9, 10, 14, 18) starts close to the middle of the time interval (t_{B1}, t_{B2}) of the control signal (S_{B}) for exposure by flash of the object acquisition means (13) and ends before the end time (t_{B2}) of this time interval and hence the position acquisition unit (9, 10, 14, 18) is activated and the position of the object acquisition means (13) is acquired when it is exposed by flash.

2. Device according to Claim 1, wherein the position acquisition unit (9, 10, 14, 18) comprises a correction unit (14, 18) for position acquisition by which interfering influences during the acquisition of the positions of the object acquisition means (13) can be taken into account and wherein the correction unit (14, 18) is controllable coupled with the exposure state of the object acquisition means (13), where the correction unit (14, 18) is activated when the object acquisition means (13) is exposed by flash.

3. Device according to one of the previous claims, wherein the object acquisition means (13) can be exposed by flash in controlled form since the light source (11) is controllable depending on the time by the device control unit (18, 19) with regard to its operating state when flash-like light is emitted and wherein the position acquisition unit (9, 10, 14, 18) and if necessary the correction unit (14, 18) for position acquisition is controllable coupled with the operating state of the light source (11), where the position acquisition unit (9, 10, 14, 18) and if necessary the correction unit (14, 18) is activated when the light source (11) emits flash-like light.

4. Device according to one of the previous claims, wherein the correction unit (14, 18) for position acquisition is controllable depending on the time by the device control unit (18, 19).

5. Device according to one of the previous claims, wherein the control of the correction unit (14, 18) for position acquisition is effected time-coupled with the base signal.

6. Device according to one of the previous claims, wherein the recording unit comprises a CCD camera (5) by which a sequence of single images each acquiring a section of the workpiece (4) can be recorded and that has at least one CCD element as an object acquisition means (13) and a camera control (19) which generates a start signal (V_{sync}) as a base signal marking the start of an single image recording sequence and controls a light source (11) in the form of a flash unit time-coupled with this start signal (V_{sync}) when flash-like light is emitted, and wherein the position acquisition unit (9, 10, 14, 18) and if necessary the correction unit (14, 18) for position acquisition is controllable likewise time-coupled with the start signal (V_{sync}) generated by the camera control (19), where the position acquisition unit (9, 10, 14, 18) and if necessary the correction unit (14, 18) for position acquisition is activated when the flash unit emits flash-like light.

7. Method for acquisition of the geometry of workpieces, where the workpiece (4) to be acquired and the object acquisition means (13) of a recording unit are moved relative to one another and the workpiece (4) can be illuminated section for section by a light source (11) of the recording unit and the illuminated sections of the workpiece (4) are acquired by the object acquisition means (13) when the latter is exposed by flash by the light source (11), where the positions of the object acquisition means (13) which the latter assumes during acquisition of the sections of the workpiece (4) relative to the workpiece are acquirable by the position acquisition unit (9, 10, 14, 18), and the position acquisition unit (9, 10, 14, 18) is controlled coupled with the exposure state of the object acquisition means (13), where the exposure state of the object acquisition means (13) and the position acquisition unit (9, 10, 14, 18) are controlled depending on the time by a device control unit (18, 19) which generates base signals (V_{sync}) which each mark the start of an single image recording sequence, wherein after the generation of a base signal (V_{sync}) and before the generation of a subsequent base signal (V_{sync}) the object acquisition means (13) is put by the device control unit (18, 19) into a recording-capable state for the duration of a time interval (t_{L1}, t_{L2}) and generates a control signal (S_{B}) for exposure by flash of the object acquisition means (13) and a control signal (S_{PE}) for the position acquisition unit (9, 10, 14, 18), where the control signal (S_{B}) for exposure by flash of the object acquisition means (13) is effective during a time interval (t_{B1}, t_{B2}) that starts after the start time (t_{L1}) of the time interval (t_{L1}, t_{L2}) while the object acquisition means (13) is put into a recording-capable state and that ends before the end time (t_{L2}) of this time interval and where the control signal (S_{PE}) for the position acquisition unit (9, 10, 14, 18) starts close to the middle of the time interval (t_{B1}, t_{B2}) of the control signal (S_{B}) for exposure by flash of the object acquisition means (13) and ends before the end time (t_{B2}) of this time interval and hence the position acquisition unit (9, 10, 14, 18) is activated and the position of the object acquisition means (13) is acquired when it is exposed by flash.

## Revendications

1. Dispositif de saisie de la géométrie de pièces à usiner avec une unité de prise de vue ainsi qu'une installation de saisie de la position (9, 10, 14, 18), sachant que l'unité de prise de vue comprend un moyen de saisie d'objets (13) ainsi qu'une source lumineuse (11) à l'aide de laquelle le moyen de saisie d'objets (13) peut être exposé à des flashs de lumière, sachant que le moyen de saisie d'objets (13) et la pièce à usiner (4) dont la géométrie doit être saisie peuvent être déplacés l'un par rapport à l'autre, que la pièce à usiner (4) peut ce faisant être partiellement illuminée par l'intermédiaire de la source lumineuse (11), et que les sections illuminées de la pièce à usiner (4) peuvent être saisies par le moyen de saisie d'objets (13) lorsque celui-ci les expose à des flashs de lumière, sachant qu'il est possible de saisir, à l'aide de l'installation de saisie des positions (9, 10, 14, 18), les positions que prend le moyen de saisie d'objets (13) par rapport à la pièce à usiner (4) lors de la saisie des sections de la pièce à usiner (4), et que l'installation de saisie des positions (9, 10, 14, 18) couplée à l'état d'exposition du moyen de saisie d'objets (13) est réglable, sachant qu'est prévue une commande de dispositif (18, 19) grâce à laquelle l'état d'exposition du moyen de saisie d'objets (13) ainsi que l'installation de saisie des positions (9, 10, 14, 18) sont réglables en fonction du temps, commande qui produit des signaux de base (V_{sync}) qui marquent respectivement le début d'un enchaînement de prises d'images individuelles, **caractérisé en ce que** la commande du dispositif (18, 19) met, en fonction du temps et respectivement après la production d'un signal de base (V_{sync}) et avant la production du signal de base suivant (V_{sync}), le moyen de saisie d'objets (13) dans un état pouvant être saisi pour la durée d'un intervalle de temps (t_{L1}, t_{L2}), et produit un signal de commande (S_{B}) pour l'exposition du moyen de saisie d'objets (13) aux flashs de lumière, ainsi qu'un signal de commande (S_{PE}) pour l'installation de saisie des positions (9, 10, 14, 18), sachant que le signal de commande (S_{B}) pour l'exposition du moyen de saisie d'objets (13) aux flashs de lumière agit pendant un intervalle de temps (t_{B1}, t_{B2}) qui commence après le point de départ (t_{L1}) de l'intervalle de temps (t_{L1}, t_{L2}) pendant lequel le moyen de saisie d'objets (13) est placé dans un état pouvant être saisi, et qui se termine avant la fin (t_{L2}) de cet intervalle de temps, et sachant que le signal de commande (S_{PE}) pour l'installation de saisie des positions (9, 10, 14, 18) agit à proximité du milieu de l'intervalle de temps (t_{B1}, t_{B2}) du signal de commande (S_{B}) pour l'exposition du moyen de saisie d'objets (13) aux flashs de lumière et se termine avant la fin (t_{B2}) de cet intervalle de temps, et qu'ainsi, l'installation de saisie des positions (9, 10, 14, 18) est activée et la position du moyen de saisie d'objets (13), est saisie, si celui-ci est exposé à des flashs de lumière.

2. Dispositif selon la revendication 1, **caractérisé en ce que** l'installation de saisie des positions (9, 10, 14, 18) comprend une installation de correction (14, 18) pour la saisie des positions, à l'aide de laquelle des influences perturbatrices peuvent être prises en compte lors de la saisie des positions du moyen de saisie d'objets (13), et que l'installation de correction (14, 18) couplée à l'état d'exposition du moyen de saisie d'objets (13) est réglable, sachant que l'installation de correction (14, 18) est activée lorsque le moyen de saisie d'objets (13) est exposé à des flashs de lumière.

3. Dispositif selon une des revendications précédentes, **caractérisé en ce que** le moyen de saisie d'objets (13) peut être exposé de façon réglable à des flashs de lumière grâce au fait que l'état de marche de la source lumineuse (11) est réglable, au moyen de la commande du dispositif (18, 19) et en fonction du temps, dans un sens émettant des flashs de lumière, et que le dispositif de saisie des positions (9, 10, 14, 18) et le cas échéant l'installation de correction (14, 18) pour la saisie des positions couplée à l'état de marche de la source lumineuse (11) est (sont) réglable(s), sachant que l'installation de saisie des positions (9, 10, 14, 18) et le cas échéant l'installation de correction (14, 18) est (sont) activée(s) lorsque la source lumineuse (11) émet des flashs de lumière.

4. Dispositif selon au moins une des revendications précédentes, **caractérisé en ce que** l'installation de correction (14, 18) pour la saisie des positions est réglable en fonction du temps et par l'intermédiaire de la commande du dispositif (18, 19).

5. Dispositif selon au moins une des revendications précédentes, **caractérisé en ce que** la commande de l'installation de correction (14, 18) pour la saisie des positions est réalisée par couplage dans le temps au signal de base.

6. Dispositif selon une des revendications précédentes, **caractérisé en ce que** l'unité de prise de vue comprend un appareil photo CCD (5) avec lequel il est possible de prendre une série de photos individuelles représentant respectivement une section de l'objet à usiner (4), et qui présente au moins un élément CCD en tant que moyen de saisie d'objets (13) ainsi qu'une commande d'appareil photo (19) qui produit, en tant que signal de base, un signal de départ (V_{sync}) marquant le début d'un enchaînement de prises de photos individuelles, et commande, par couplage dans le temps à ce signal de départ (V_{sync}), une source lumineuse (11) en forme de flash dans un sens émettant des flashs de lumière, et que l'installation de saisie des positions (9, 10, 14, 18) et le cas échéant l'installation de correction (14, 18) pour la saisie des positions, est (sont) également réglable(s) par couplage dans le temps au signal de départ (V_{sync}) émis par la commande de l'appareil (19), sachant que l'installation de saisie des positions (9, 10, 14, 18) et le cas échéant l'installation de correction (14, 18) est (sont) activée(s) lorsque le flash émet des flashs de lumière.

7. Procédé de saisie de la géométrie de pièces à usiner, sachant que la pièce à usiner (4) dont la géométrie doit être saisie et un moyen de saisie d'objets (13) d'une unité de prise de vue sont déplacés l'un par rapport à l'autre, et que la pièce à usiner (4) est ce faisant partiellement illuminée au moyen d'une source lumineuse (11) de l'unité de prise de vue, et que les sections illuminées de la pièce à usiner (4) sont saisies par le moyen de saisie d'objets (13) lorsque celui-ci les expose à des flashs de lumière au moyen de la source lumineuse (11), sachant que sont saisies, par l'intermédiaire d'une installation de saisie des positions (9, 10, 14, 18), les positions du moyen de saisie d'objets (13) que celui-ci prend par rapport à la pièce à usiner (4) lors de la saisie des sections de la pièce à usiner (4), et que l'installation de saisie des positions (9, 10, 14, 18) est commandée par couplage à l'état d'exposition du moyen de saisie d'objets (13), sachant que l'état d'exposition du moyen de saisie d'objets (13) et l'installation de saisie des positions (9, 10, 14, 18) sont réglés en fonction du temps par une commande de dispositif (18, 19) qui produit des signaux de base (V_{sync}) qui marquent respectivement le début d'un enchaînement de prises d'images individuelles, **caractérisé en ce que** la commande du dispositif (18, 19) met, en fonction du temps et respectivement après la production d'un signal de base (V_{sync}) et avant la production du signal de base suivant (V_{sync}), le moyen de saisie d'objets (13) dans un état pouvant être saisi pour la durée d'un intervalle de temps (t_{L1}, t_{L2}), et qu'est produit un signal de commande (S_{B}) pour l'exposition du moyen de saisie d'objets (13) aux flashs de lumière, ainsi qu'un signal de commande (S_{PE}) pour l'installation de saisie des positions (9, 10, 14, 18), sachant que le signal de commande (S_{B}) pour l'exposition du moyen de saisie d'objets (13) aux flashs de lumière agit pendant un intervalle de temps (t_{B1}, t_{B2}) qui commence après le point de départ (t_{L1}) de l'intervalle de temps (t_{L1}, t_{L2}) pendant lequel le moyen de saisie d'objets (13) est placé dans un état pouvant être saisi, et qui se termine avant la fin (t_{L2}) de cet intervalle de temps, et sachant que le signal de commande (S_{PE}) pour l'installation de saisie des positions (9, 10, 14, 18) agit à proximité du milieu de l'intervalle de temps (t_{B1}, t_{B2}) du signal de commande (S_{B}) pour l'exposition du moyen de saisie d'objets (13) aux flashs de lumière et se termine avant la fin (t_{B2}) de cet intervalle de temps, et qu'ainsi l'installation de saisie des positions (9, 10, 14, 18) est activée et la position du moyen de saisie d'objets (13), est saisie, si celui-ci est exposé aux flashs de lumière.
